# EUROPÄISCHE PATENTSCHRIFT

(11) **EP 0 471 042 B1**
(45) Veröffentlichungstag und Bekanntmachung des Hinweises auf die Patenterteilung: **03.07.1996**
(21) Anmeldenummer: 91902136.0
(22) Anmeldetag: 21.12.1990
(51) Int. Cl.: F16L 55/10

(54) **VORRICHTUNG ZUM VERSCHLIESSEN VON DRUCKMITTELKANÄLEN**
DEVICE FOR CLOSING PRESSURIZED MEDIUM CHANNELS
DISPOSITIF DE FERMETURE DE CANAUX CONTENANT DES MILIEUX SOUS PRESSION

(30) Priorität: 01.03.1990 DE 4006368
(43) Veröffentlichungstag der Anmeldung: 19.02.1992
(73) Patentinhaber: ALFRED TEVES GmbH, D-60441 Frankfurt (DE)
(72) Erfinder: PFEIFFER, Bernd, D-6101 Gross-Bieberau (DE)
(86) Internationale Anmeldenummer: EP9002281
(87) Internationale Veröffentlichungsnummer: WO9113284

(56) Entgegenhaltungen:
- GB-A- 1 332 219
- US-A- 3 952 395

## Beschreibung

Die Erfindung betrifft eine Vorrichtung zum Verschließen von Druckmittelkanälen in einem Gehäuse nach dem Oberbegriff des Anspruchs 1.

Vorrichtungen zum Verschließen von Druckmittelkanälen in hydraulischen und pneumatischen Leitungsverbindungen sowie in Aggregaten finden vielfältige Anwendung und werden daher in großen Stückzahlen benötigt. Verschlußvorrichtungen der vorgenannten Art werden sowohl als kraft- wie auch als formschlüssige Elemente ausgebildet. Allgemein bekannt und häufig anzutreffen sind beispielsweise Schraub-, Bajonett-, und Preßverschlüsse, die zwar eine hinreichend befriedigende Absperrung der Leitungsverbindungen ermöglichen, doch häufig infolge ihrer aufwendigen Konstruktion und/oder Montage Nachteile hervorrufen, die den Einsatzzweck der zuvorgenannten Verschlußvorrichtungen und die Funktionsfähigkeit der Anlage beeiträchtigen können.

Beispielsweise ist aus der abbildungsgemäßen Darstellung der DE-OS 37 29 216 bekannt, die Vorrichtung zum Verschließen eines Druckmittelkanals im Ventilblock lediglich durch eine relativ einfach herzustellende Kugel zu bewerkstelligen, die durch das Einpressen und durch das anschließende Verstemmen im erweiterten Kanalabschnitt relativ sicher und kostengünstig im Ventilblock gehalten ist. Diese relativ billige und sichere Verschlußmaßnahme hat jedoch den Nachteil, daß während des Einpreßvorganges Werkstoffmaterial zwischen den Kontaktflächen der Kugel und dem relativ weicheren Ventilblockmaterial abgetragen wird, so daß Partikelabrieb und Späne in den Druckmittelkanal gelangen kann. Als Folge dieses unerwünschten Effektes bedarf es gründlicher Spülvorgänge, um im späteren Einsatz die Funktionsfähigkeit der Magnetventile im Ventilblockaggregat sicherstellen zu können.

Es ist zwar bereits die Verwendung von sogenannten Koenigsexpandern bekannt, wonach zunächst ein mit Krallen versehener hülsenförmiger Stützkörper in den zu verschließenden Druckmittelkanal eingesetzt wird, in dem nach seiner Positionierung eine Kugel eingepreßt wird, um infolge der Aufweitung des Stützkörpers die nötige Haltekraft zu erzielen. Dieses Verschlußsystem stellt jedoch hinsichtlich des erforderlichen Montageaufwandes, der auch weiterhin noch im geringen Umfang bestehenden Abriebgefahr und den Herstellungskosten, keine optimale Verbesserung des gegenwärtigen Verschlußkonzeptes dar, weshalb es einer besonders einfachen und zugleich absolut sicheren Verschlußeinrichtung bedarf.

Aus der Druckschrift GB-A-1 332 219 geht ein in einer Stufenbohrung federbelastetes Kugelrückschlagventil hervor, dessen Stellung ausschließlich in Abhängigkeit von pneumatischen Druckunterschieden vor und hinter dem Ventilsitz des Rückschlagventils bestimmt wird, so daß durch die in der Stufenbohrung wirksame Druckfeder kein permanenter Verschluß der Stufenbohrung vorliegt. Zwischen der am Kugelrückschlagventil anliegenden Druckfeder und einem die Stufenbohrung nach außen verschließenden Stopfen befindet sich ein Hohlraum, an dem eine Vakuumquelle zum Evakuieren des den Ventilsitz begrenzenden Innenraums anschließbar ist. Bei der Erzeugung eines Vakuums öffnet sodann das Kugelrückschlagventil die Verbindung in den Innenraum entgegen der Wirkung der Druckfeder im Hohlraum, so daß dem Innenraum die Feuchtigkeit entzogen wird. Mit der Beendigung der Evakuierung schließt das Kugelrückschlagventil durch die Wirkungen der Druckfeder den Innenraum, so daß der nach außen abdichtende Stopfen in der Stufenbohrung entfernt werden kann.

Aus der US-A-3, 925, 395 die den nächstkommenden Stand der Technik bildet, geht eine Vorrichtung zum Verschließen eines Druckmittelkanals in einem Gehäuse durch einen im Druckmittelkanal eingepreßten Schließkörper hervor, der mittels eines Stempel in eine angefaste Bohrung eingepreßt wird, wobei das gegenüber dem Schließkörper weichere Gehäusematerial durch den Stempel mitverformt wird.

Der Erfindung liegt daher die Aufgabe zu Grunde, eine besonders einfach herzustellende sowie absolut sichere Verschlußeinrichtung zu schaffen, die mit geringstem Montageaufwand und ohne das Entstehen von Abriebpartikeln einen Druckmittelkanal zuverlässig verschließt.

Daher zeigt es sich als besonders vorteilhaft, die gestellte Aufgabe auf überraschend einfache und fortschrittliche Weise durch Verwendung einer Vorrichtung zum Verschließen von Druckmittelkanälen in einem Gehäuse der eingangs genannten Gattung mit den gemäß dem Patentanspruch 1 kennzeichnenden Merkmalen zu lösen.

Um im erweiterten Kanalabschnitt einen sicheren Halt des ersten Schließkörpers zu gewährleisten sieht die Erfindung vor, das erste Schließglied gegenüber dem erweiterten Kanalabschnitt mit einer Übergangsoder Presspassung zu versehen, und den zwischen dem ersten Schließkörper und dem verengten Übergangsbereich im Kanalabschnitt eingefügte zweite Schließkörper druckmittelsperrend auf die am Übergangsbereich angeordneten Dichtsitzfläche zu pressen.

Zweckmäßigerweise ist das Außenmaß des zweiten Schließkörpers geringfügig kleiner als das Außenmaß des ersten Schließkörpers, wobei der zweite Schließkörper mit einer Spielpassung gegenüber dem erweiterten Kanalabschnitt versehen ist, um mit seiner Körperberandung ungehindert an der Dichtsitzfläche des erweiterten Kanalabschnitts zur Anlage zu gelangen.

Besonders vorteilhaft ist es, als Verschlußkörper zwei Stahlkugeln gemäß den abgestuften und eng tolerierten Normgrößen zu verwenden, die unmittelbar hintereinander in den erweiterten Kanalabschnitt angeordnet einen ausreichend großen Hohlraum zur Aufnahme von Festkörperpartikeln ermöglichen.

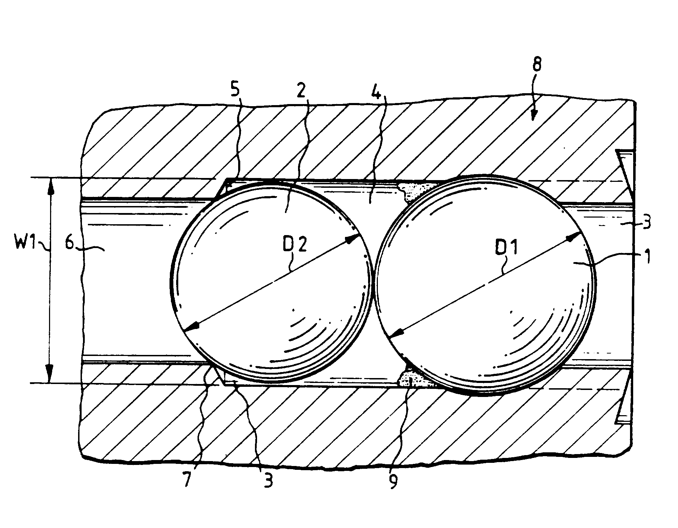

Weitere Vorteile und Merkmale der Erfindung gehen aus der Beschreibung eines Ausführungsbeispieles (Fig. 1) hervor.

Fig. 1 zeigt
die erfindungsgemäße Vorrichtung zum Verschließen eines Druckmittelkanals, dargestellt im vergrößerten Zeichnungsmaßstab.

Die Abbildung zeigt im Querschnitt den erweiterten Kanalabschnitt 3 des Gehäuses 8 eines hydraulischen Aggregates. Dieser erweiterte Kanalabschnitt 3 nimmt in Reiheschaltung die als Kugeln ausgeführten beiden Schließkörper 1,2 auf, wobei der erste Schließkörper 1 durch Erzeugung einer Druckkraft auf den zweiten Schließkörper 2 in die Kanalerweiterung eingepreßt und anschließend verstemmt gehalten ist. Der Übergangsbereich 5 zwischen dem erweiterten Kanalabschnitt 3 und dem an einen Verbraucher angeschlossenen Druckmittelkanal 6 bildet die Dichtsitzfläche 7, an dem der zweite Schließkörper 2 unter Einwirkung der vom ersten Schließkörper 1 erzeugten Anpresskraft druckmittelsperrend anliegt. Infolge der Spielpassung des zweiten Schließkörpers 2 im erweiterten Kanalabschnitt 3, bestimmt die über den zweiten Schließkörper 2 auf die kegelförmig gestaltete Dichtsitzfläche 7 wirksame Anpresskraft die Medientrennung zwischen dem Druckmittelkanal 6 und dem im erweiterten Kanalabschnitt 3 eingeschlossenen Hohlraum 4. Durch die Verwendung von Kugeln als Schließkörper 1,2 ist eine einfache Zentrierung und gleichzeitig eine gute Abdichtung des zweiten Schließkörpers 2 auf der Dichtsitzfläche 7 gegeben, sowie eine sichere Befestigung des ersten Schließkörpers 1 im erweiterten Kanalabschnitt 3. Der von den Grenzflächen der beiden Schließkörper 1,2 und dem erweiterten Kanalabschnitt 3 eingeschlossene Hohlraum 4 kann somit die durch das Einpressen des ersten Schließkörpers 1 entstandenen Festkörperpartikel auffangen. Eine Verunreinigung des an den erweiterten Kanalabschnitt 3 angrenzenden Druckmittelkanal 6 ist jedoch durch die Absperrwirkung des ersten Schließkörpers 1 an der Dichtsitzfläche 7 ausgeschlossen. Gleichzeitig gewährleistet die erfindungsgemäße Hintereinanderschaltung zweier Schließkörper 1,2 den zweifachen Schutz gegen Druckmittelleckage, so daß eine ausgesprochen zuverlässige Abdichtung des Druckmittelkanals 6 im Gehäuse 8 wirksam ist.

Das Ausführungsbeispiel zeigt zur Verdeutlichung des Erfindungsgedankens die Kombination von zwei als Kugelkörper ausgeführten Schließkörpern 1,2. Andere, analoge Ausführungsformen zur Gestaltung der Schließkörper 1,2 sind denkbar ohne einen Anspruch auf detaillierte Darstellung erheben zu müssen.

### Bezugszeichenliste

1 erster Schließkörper
2 zweiter Schließkörper
3 erweiterter Kanalabschnitt
4 Hohlraum
5 Übergangsbereich
6 Druckmittelkanal
7 Dichtsitzfläche
8 Gehäuse
9 Festkörperpartikel
D1 Außenmaß des ersten Schließkörpers
D2 Außenmaß des zweiten Schließkörpers
W1 lichte Weite des erweiterten Kanalabschnitts

## Patentansprüche

1. Vorrichtung zum Verschließen von Druckmittelkanälen in einem Gehäuse, insbesondere Ventilblockgehäuse, durch einen im Druckmittelkanal (6) eingepreßten Schließkörper, dadurch **gekennzeichnet**, daß der Schließkörper als erster Schließkörper (1) zumindest an einen zweiten Schließkörper (2) gepreßt ist, so daß der zweite Schließkörper (2) vom ersten Schließkörper (1) in einem erweiterten Kanalabschnitt (3) gehalten ist, daß die miteinander korrespondierenden Begrenzungsflächen des ersten und zweiten Schließkörpers (1,2) zusammen mit den benachbarten Begrenzungsflächen des erweiterten Kanalabschnittes (3) einen Hohlraum (4) bilden und daß der zweite Schließkörper (2) anlegbar an einem verengten Übergangsbereich (5) zwischen dem erweiterten Kanalabschnitt (3) und dem Druckmittelkanal (6) gehalten ist.

2. Vorrichtung zum Verschließen von Druckmittelkanälen nach Anspruch 1, dadurch **gekennzeichnet**, daß das Außenmaß (D2) des zweiten Schließkörpers (2) kleiner ist als das Außenmaß (D1) des ersten Schließkörpers (1).

3. Vorrichtung zum Verschließen von Druckmittelkanälen nach Anspruch 1 oder 2, dadurch **gekennzeichnet**, daß der erste Schließkörper (1) zumindest ein gleiches Außenmaß (D1) oder ein größeres Außenmaß (D1) aufweist, als die lichte Weite (W1) des Kanalabschnitts (3), während das Außenmaß (D2) des zweiten Schließkörpers (2) im erweiterteten Kanalabschnitt (3) eine Spielpassung aufweist.

4. Vorrichtung zum Verschließen von Druckmittelkanälen nach Anspruch 1, dadurch **gekennzeichnet**, daß der verengte Übergangsbereich (5) eine Dichtsitzfläche (7) zur Aufnahme des zweiten Schließkörpers (2) aufweist, an den der zweite Schließkörper (2) zur Trennung des Hohlraumes (4) vom Druckmittelkanal (6) anlegbar ist.

5. Vorrichtung zum Verschließen von Druckmittelkanälen nach einem der vorhergehenden Ansprüche, dadurch **gekennzeichnet**, daß die beiden Schließkörper (1,2) als Kugeln ausgebildet sind, so daß der Hohlraum (4) im erweiterten Kanalabschnitt (3) im wesentlichen von den freien Kugelschalenflächen begrenzt ist.

6. Vorrichtung zum Verschließen von Druckmittelkanälen nach einem der vorhergehenden Ansprüche, dadurch **gekennzeichnet**, daß die Dichtsitzfläche (7) als Kegeldichtsitz ausgeführt ist.

## Claims

1. An arrangement for closing off pressure fluid passages in a housing, in particular a valve block housing, by means of a closure member press fitted into the pressure fluid passage (6),
**characterized** in that the closure member as a first closure member (1) is pressed to bear against at least a second closure member (2), so that the second closure member (2) is retained by the first closure member (1) in an enlarged passage portion (3), in that the mating boundary surfaces of the first and the second closure member (1, 2) together with the adjacent boundary surfaces of the enlarged passage portion (3) form a cavity (4), and in that the second closure member (2) is retained abuttably on a narrowed transition area (5) between the enlarged passage portion (3) and the pressure fluid passage (6).

2. An arrangement for closing off pressure fluid passages as claimed in claim 1,
**characterized** in that the overall dimension (D2) of the second closure member (2) is smaller than the overall dimension (D1) of the first closure member (1).

3. An arrangement for closing off pressure fluid passages as claimed in claim 1 or 2,
**characterized** in that the first closure member (1) has an overall dimension (D1) at least equal to or an overall dimension (D1) larger than the inside width (W1) of the passage portion (3), and the overall dimension (D2) of the second closure member (2) has a clearance fit in the enlarged passage portion (3).

4. An arrangement for closing off pressure fluid passages as claimed in claim 1,
**characterized** in that the narrowed transition area (5) has a sealing seat surface (7) for accommodating the second closure member (2), and the second closure member (2) is movable into abutment with the sealing seat surface for isolating the cavity (4) from the pressure fluid passage (6).

5. An arrangement for closing off pressure fluid passages as claimed in any one of the preceding claims,
**characterized** in that the two closure members (1, 2) are designed as balls so that the cavity (4) in the enlarged passage portion (3) is substantially defined by the free ball cup surfaces.

6. An arrangement for closing off pressure fluid passages as claimed in any one of the preceding claims,
**characterized** in that the sealing seat surface (7) is designed as a conical sealing seat.

## Revendications

1. Dispositif d'obturation de conduits d'agent de pression situés dans un boîtier, notamment un boîtier de bloc de valves, au moyen d'un obturateur enfoncé à force dans le conduit d'agent de pression (6), caractérisé en ce que l'obturateur, constituant un premier obturateur (1), est appliqué sous pression au moins sur un second obturateur (2), de façon que le second obturateur (2) soit maintenu par le premier obturateur (1) dans une section de conduit (3) plus large, en ce que les surfaces délimitant le premier et le second obturateurs (1, 2) qui se correspondent forment une cavité (4) avec les surfaces voisines délimitant la section de conduit (3) plus large et en ce que le second obturateur (2) est maintenu de façon à pouvoir être appliqué sur une zone de transition (5) qui présente un rétrécissement, entre la section de conduit (3) plus large et le conduit d'agent de pression (6).

2. Dispositif d'obturation de conduits d'agent de pression selon la revendication 1, caractérisé en ce que la dimension extérieure (D2) du second obturateur (2) est inférieure à la dimension extérieure (D1) du premier obturateur (1).

3. Dispositif d'obturation de conduits d'agent de pression selon la revendication 1 ou 2, caractérisé en ce que le premier obturateur (1) présente au moins une dimension extérieure (D1) identique, ou une dimension extérieure (D1) supérieure, à la dimension d'ouverture libre (W1) de la section de conduit (3), tandis que la dimension extérieure (D2) du second obturateur (2) présente un ajustement avec jeu dans la section de conduit (3) plus large.

4. Dispositif d'obturation de conduits d'agent de pression selon la revendication 1, caractérisé en ce que la zone de transition (5) qui présente un rétrécissement comporte une surface de siège d'étanchéité (7), destinée à recevoir le second obturateur (2), sur laquelle le second obturateur (2) peut être appliqué en vue d'isoler la cavité (4) vis-à-vis du conduit d'agent de pression (6).

5. Dispositif d'obturation de conduits d'agent de pression selon l'une des revendications précédentes, caractérisé en ce que les deux obturateurs (1, 2) sont réalisés sous forme de billes, de sorte que la cavité (4) prévue dans la section de conduit (3) plus large est pour l'essentiel délimitée par les surfaces libres de calottes sphériques.

6. Dispositif d'obturation de conduits d'agent de pression selon l'une des revendications précédentes, caractérisé en ce que la surface de siège d'étanchéité (7) est réalisée sous forme d'un siège d'étanchéité conique.
